# EUROPEAN PATENT APPLICATION

(11) **EP 1 350 953 A2**
(43) Date of publication of application: **08.10.2003**
(21) Application number: 03290700.8
(22) Date of filing: 20.03.2003
(51) Int. Cl.: F03D 11/04

(54) **Crane for the assembly of wind turbines and assembly procedure**

(30) Priority: 26.03.2002 ES 200200712
(71) Applicant: Torres Martinez, Manuel, E-31007 Pamplona (ES)
(72) Inventor: Torres Martinez, Manuel, E-31007 Pamplona (ES)
(74) Representative: Thévenet, Jean-Bruno

(57) **Abstract**

Crane for the assembly of wind turbines and assembly procedure, the former consisting of a central structure (1) which may be mounted around the tower (2) of the wind turbine and provisionally locked onto it at any height, with an assembly formed by a jib (4) and a counter-jib (5) configuring a tilting rotary unit with respect to the structure (1) and including their respective winches (6 and 8), by means of which the whole of the crane may be hoisted to a higher position and the components comprising the wind turbine may be raised to the position of assembly.

## Description

The present invention refers to a crane destined for the assembly of wind turbines of great height, making use of the actual tower of the wind turbine under construction as the mast of the crane, in order to undertake an assembly process that enables considerable heights to be reached.

The production power of wind turbines depends largely on the force of the wind acting upon them and of the capacity of the wind turbine to exploit the action of the wind.

Given that wind is a spontaneous natural phenomenon which cannot be controlled, all that remains is to seek the areas most prone to winds to install the wind turbines and configure these to gain the maximum efficiency from the action of the wind.

The most essential factor regarding wind turbines, in terms of efficiently exploiting the action of the wind, is the length of the rotor blades with which to harness said wind action, with the tendency accordingly to increase the length of the blades in the designs tailored to increase the production output of the wind turbines, which correspondingly means increasing the height of the wind turbines, in relation to the length of the rotor blades.

In the case of conventional cranes and particularly of self-moving cranes, which are the ones that are normally used in the assembly of wind turbines, given the sites where these are located, the capacity for the erection of the wind turbines is limited in terms of the accessible height, with this being a conditioning factor that requires the development of other means in order to reach greater construction heights.

In accordance with this invention, a crane and an assembly procedure are proposed whereby erection is undertaken of the wind turbines up to any height, without the restrictions imposed by conventional hoisting devices.

The crane that is the subject of this invention comprises a central structure that is designed to be mounted around the tower of the wind turbines to be constructed, with the structure being fitted with devices that enable it to be provisionally locked into place on the application tower. Arranged in rotary connection with the aforementioned central structure of the crane are a jib and a counter-jib, each one fitted with its respective hoisting winches designed, respectively, to manoeuvre the suspension of application loads and the suspension of a counterweight, as well as to address, with the same, the suspension and the hoisting of the crane itself with respect to the support tower.

The jig and the counter-jig are a double unit, consisting of two equal parallel assemblies that are mounted onto the sides of the central structure, whereby said assemblies can tilt with respect to the rotary system by which it is coupled to the central structure, up to a vertical position and unhindered by the support tower.

Thus a crane is obtained that is capable of being mounted onto the tower of a wind turbine, in order to use said tower as the support mast for the crane, in such a manner that by means of its hoisting gear and rotary tilting displacement, the crane allows for the assembly of elements of the structure of the wind turbine located at a higher level. Thus, by combining said assembly with the climbing of the crane by its own means up the support tower, assembly may be undertaken of sections of tower of any height, as well as of the corresponding wind turbine on the tower.

The process of erection of a wind turbine with the crane subject of the invention comprises the assembly of a part of lesser height of the tower of the wind turbine, by whatever means, and the mounting of the crane with its central structure embracing said lower part of the tower, whereupon the crane climbs by means of its hoisting gear, up to the top of said lower part of the tower that has already been erected, whereupon the crane is secured with the locking devices fitted to its central structure.

In this position, the crane may be used as a tower crane to hoist, by means of the winch on the jib, a further section of the tower and, by means of the winch on the counter-jib, to hoist a counter-weight, whereby upon tilting the assembly of the jib and the counter-jib in relation to the central structure towards a vertical position, the section of tower raised is hoisted to its position of assembly atop the part of the tower already erected.

By repeating the sequence of raising the crane to the top of the erected part of the tower and the hoisting of successive subsequent sections up to the assembly position above, a tower of any height may be constructed and the same approach may be used to raise, to the extreme top of the tower, the rotating coupling ring for the wind turbine, the body of the wind turbine and the corresponding blade rotor; finally, the crane is brought down using its own hoisting gear, to ground level, where it may be dismounted.

When fitted on the tower of the wind turbine, the crane in question may be employed as a standard tower crane, performing the functions of suspension and hoisting, for the handling of any heavy pieces below it. In particular, when the crane is attached onto the rotary coupling ring of the wind turbine on the top of the tower the crane can turn around, being able to manoeuvre like a conventional tower crane.

In view of the above, the crane that is the object of this invention is undoubtedly equipped with highly beneficial features, having a distinctive design and a preferential role in the construction of wind turbines of great height, for which function it is designed.

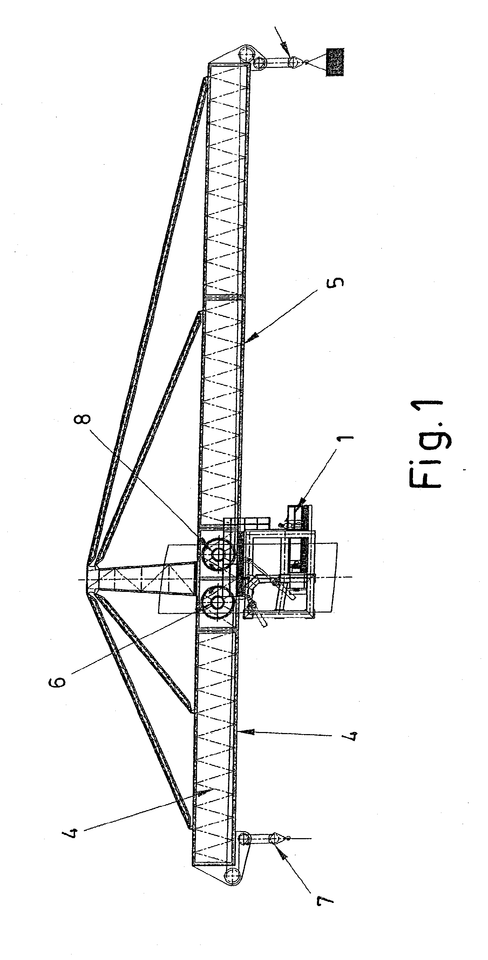

Figure 1 presents a side view of the crane in question, according to a possible embodiment.

Figure 2 is a plan view of the crane.

Figures 3 to 8 illustrate a sequence of the process of assembly of a section corresponding to the height of the tower of the wind turbine, with the crane in question.

Figures 9 to 14 illustrate a sequence of the process of assembly of the rotary coupling ring of the wind turbine on the tower, using said crane of the invention.

Figures 15 to 17 illustrate a sequence of the process of assembly of the body of the wind turbine on the upper part of the tower, using the crane of the invention.

Figures 18 to 19 illustrate a sequence of the assembly of the blade rotor onto the body of the wind turbine, using the crane of the invention.

Figures 20 to 22 illustrate a sequence of the descent of the crane to the base of the tower of the wind turbine.

Figure 23 is a side view of a wind turbine following the withdrawal of the assembly crane.

Figure 24 is a front view of the same as in the previous figure.

The purpose of the invention is a crane and a procedure destined for the erection of wind turbines of great height, overcoming the limitations posed by standard hoisting gear.

The crane in question consists of a central structure (1), formed by an assembly that can be mounted around the tower (2) of the wind turbines to be constructed, comprising devices (3) for locking the structure in a set position on the tower (2) of the application, on a provisional basis.

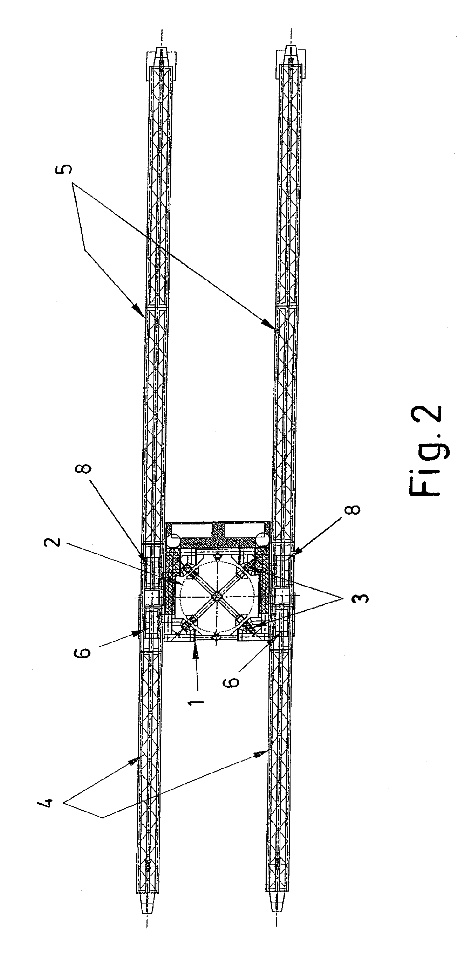

A jib (4) and a counter-jib (5) are mounted in rotary assembly to the aforementioned central structure (1); they are made up of parallel units that are mounted in rotary assembly onto the sides of the central structure (1), as shown in figure 2, in a manner whereby the assembly formed by the jib (4) and of the counter-jib (5) may rotate as a unit in relation to the central structure (1), from a horizontal position to a vertical position and even beyond that.

With this in mind, the crane may be mounted in relation to a tower (2), upon which it may be secured at any height using the devices (3), with the possibility of tilting between the horizontal and vertical positions without affecting the tower (2), as the free space between the two lateral assemblies comprising the jib (4) and the counter-jib (5) permits the clearance of the tower (2), with no effect on the tilting movement.

The jib (4) is equipped with winches (6) by which a hook (7) is manoeuvred for the hoisting of loads, whilst the counter-jib (5) is in turn fitted with winches (8) by means of which the hook (9) is manoeuvred for the hoisting of a counterweight.

The same winches (6 and 8) furthermore enable, by means of their attachment to a point higher, the crane assembly to climb to the desired height.

In accordance with this, the assembly process for the construction of a wind turbine, according to the invention, consists of the following sequence of procedures:

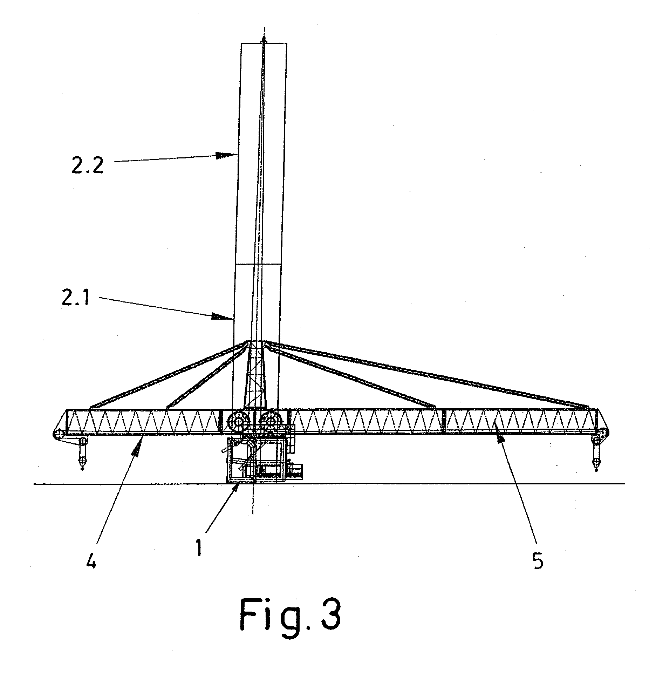

The first stage is to erect, by standard procedures, the lower part of the tower of the wind turbine to be constructed, for example with two sections (2.1 and 2.2); then, assembly is undertaken at ground level, in relation to this lower part of the tower, of the crane covered by the invention, as shown in figure 3.

The lower part of the tower that is to be erected beforehand for the incorporation of the crane is only required to be slightly higher than the length of the counter-jib (5), so that this height is perfectly suited to working with standard hoisting gear.

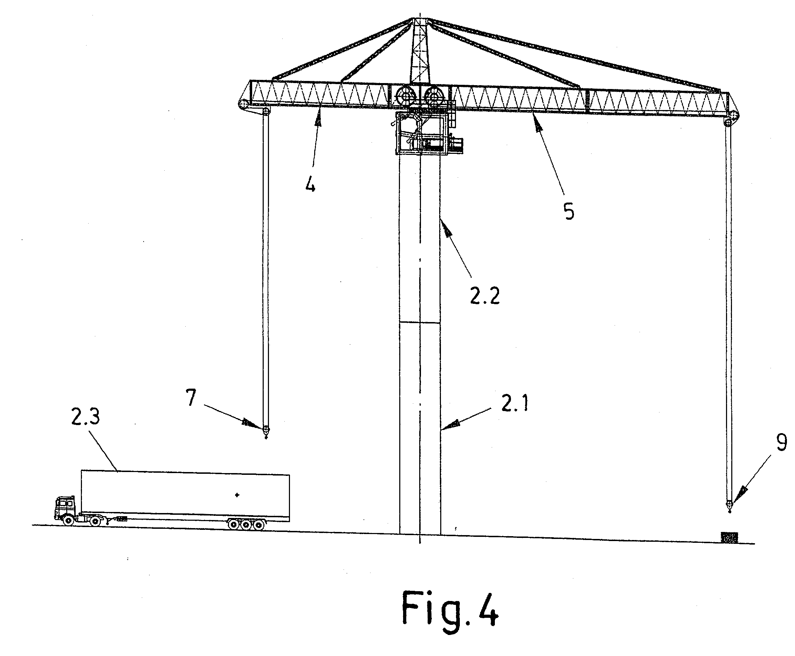

Subsequently, by attaching the hoisting gear of the crane to the top of the erected section of the tower, the crane climbs, by means of its own winches (6 and 8), up to the highest point on the erected section of the tower, as shown in figure 4, with the crane being secured at the top of the erected section of the tower using the devices (3).

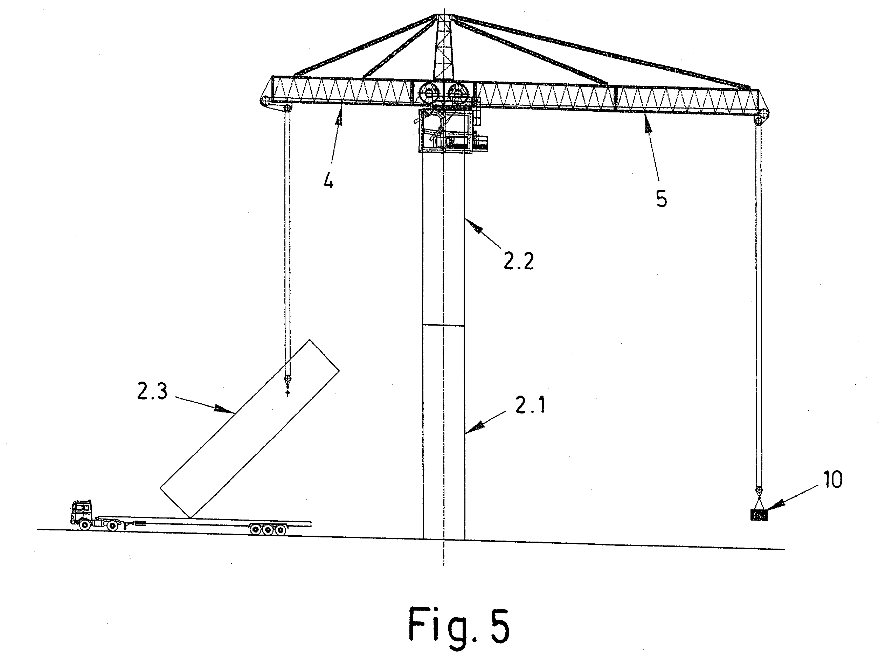

From that position, by means of the hook (7) on the jib (4) another section (2.3) of the assembly of the tower is attached, whilst with the hook (9) on the counter-jib (5) a counterweight is attached (10), as shown in figure 5.

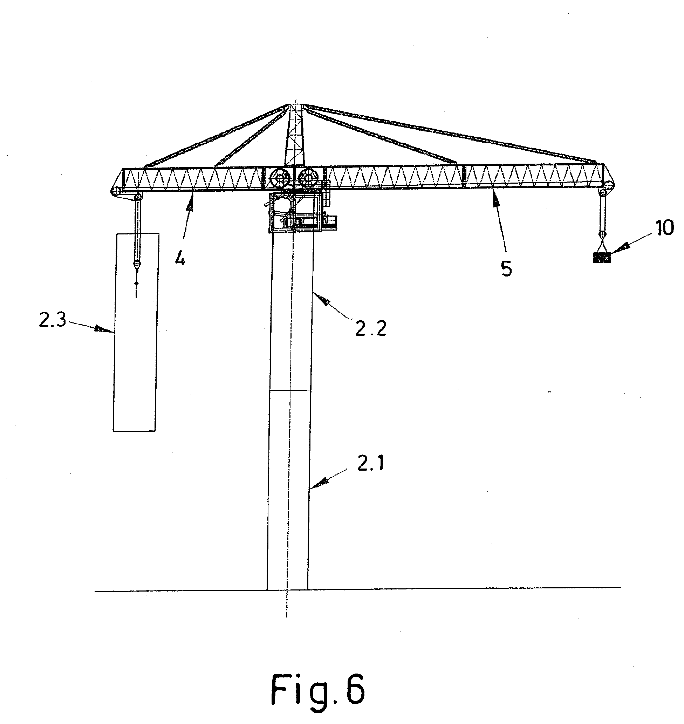

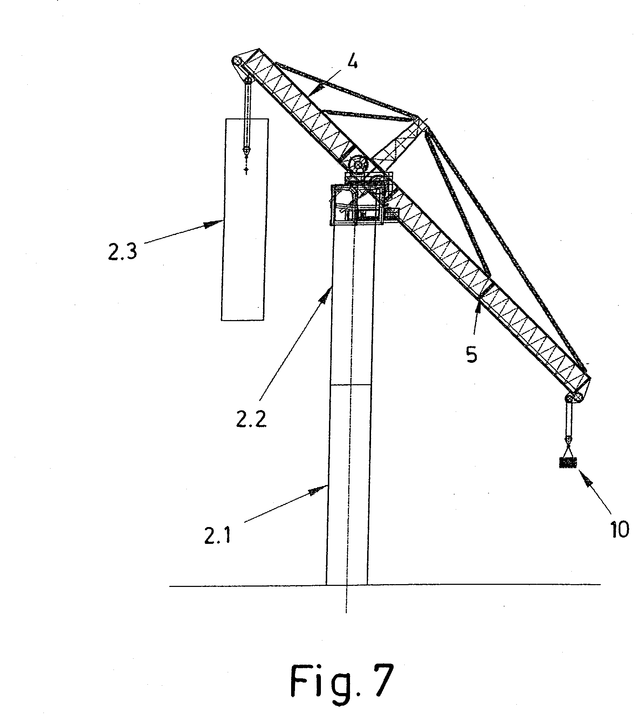

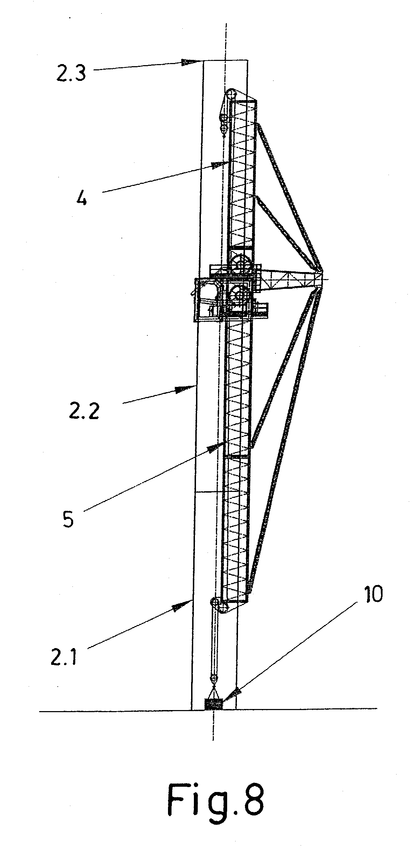

By subsequently operating the winches (6 and 8) the section (2.3) and the counter-weight (10) are hoisted, as shown in figure 6; and then, by tilting the assembly of the jib (4) and of the counter-jib (5), as shown in figure 7, the section (2.3) is raised to its position of assembly on top of the highest section (2.2) of the erected part of the tower, as shown in figure 8.

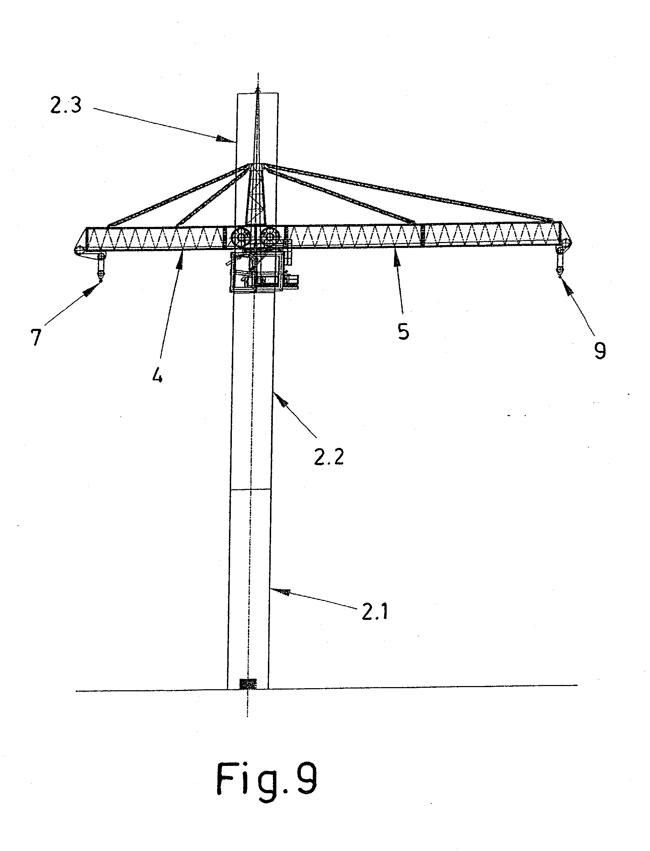

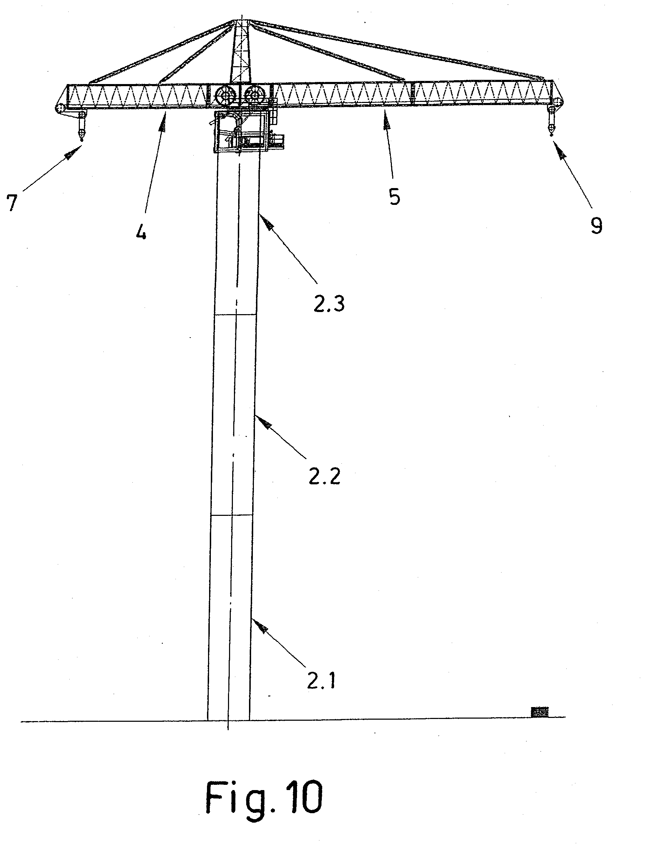

Once this has been effected, the assembly of the jib (4) and of the counter-jib (5) is returned to its horizontal position, as shown in figure 9. From that position, the crane assembly is once more hoisted in the same way as in the previous operation, up to the highest point on the section (2.3), as shown in figure 10, so that by repeating the previous sequence, successive sections (2.4), etc. can be mounted until the desired height of the tower is attained.

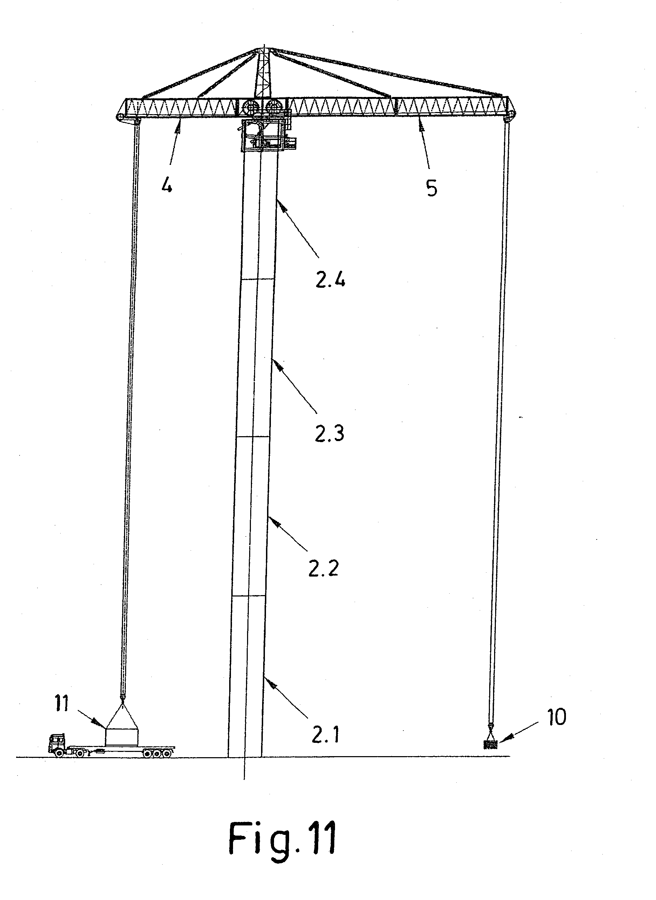

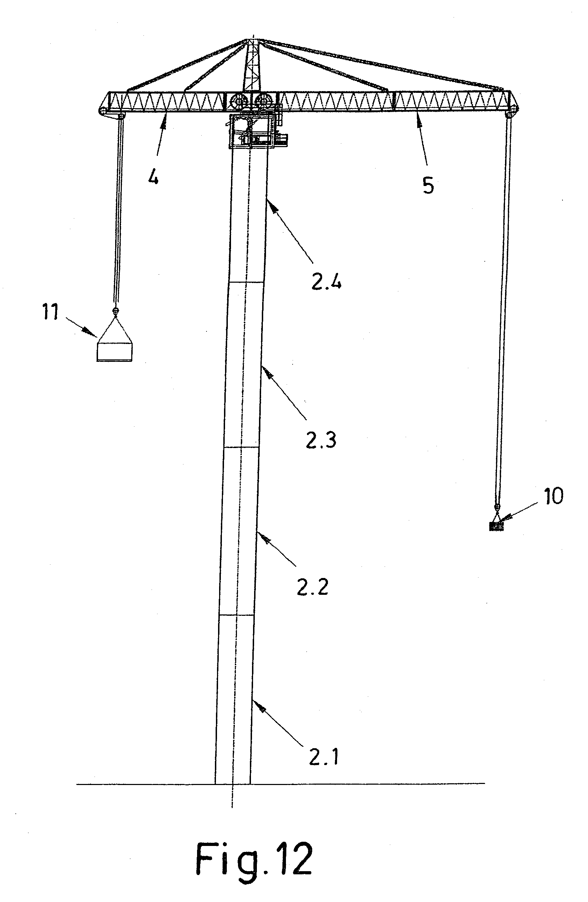

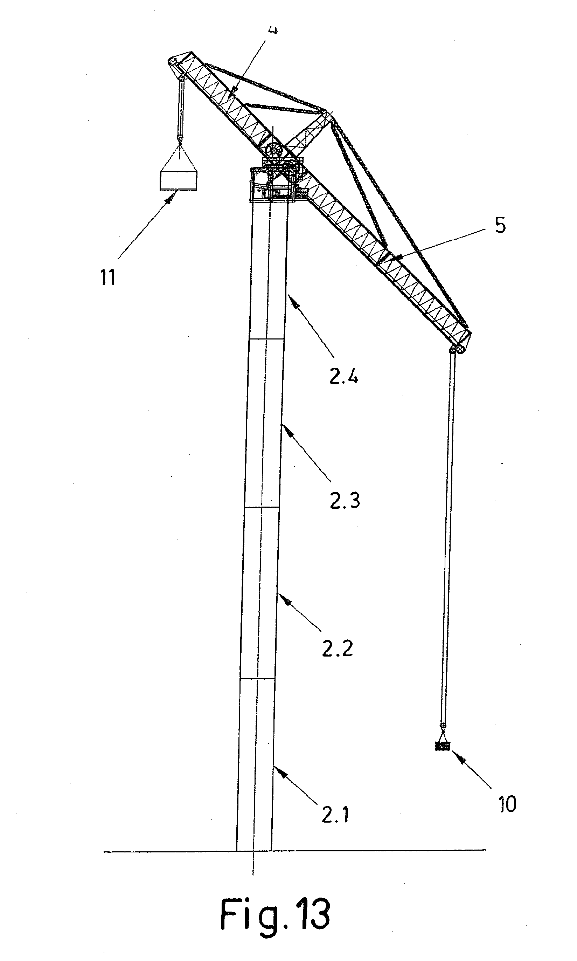

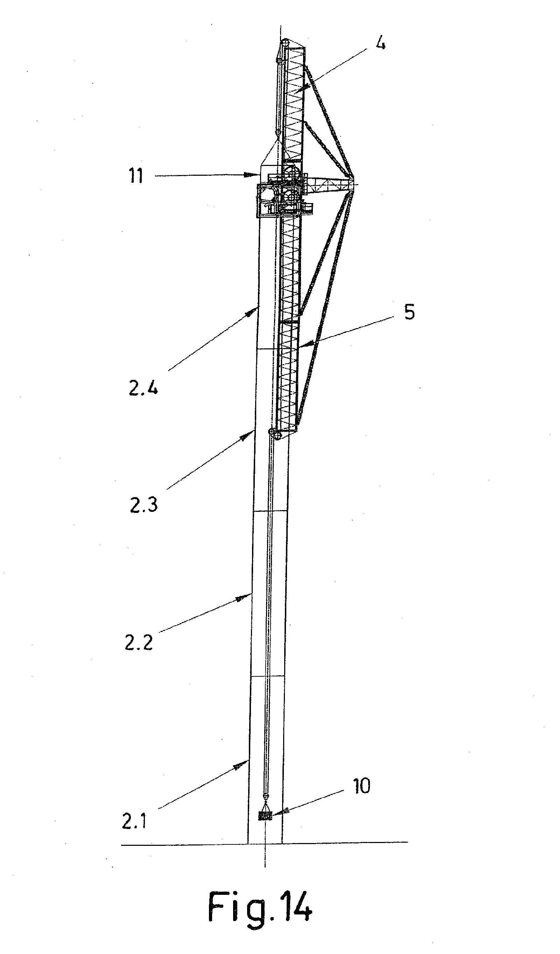

The same system is applied for performing the assembly of the rotary coupling ring (11) of the wind turbine on the highest point of the tower. In other words, by means of the hook (7) on the jib (4) said ring (11) is attached and by means of the hook (9) on the counter-jib the corresponding counterweight (10) is attached, as shown in figure 11; the ring (11) and the counterweight (10) are then hoisted, as shown in figure 12, and subsequently, by means of the tilting of the assembly of the jib (4) and the counter-jib (5), as shown in figure 13, the ring (11) is hoisted to its position of assembly on the highest point on the tower, as shown in figure 14.

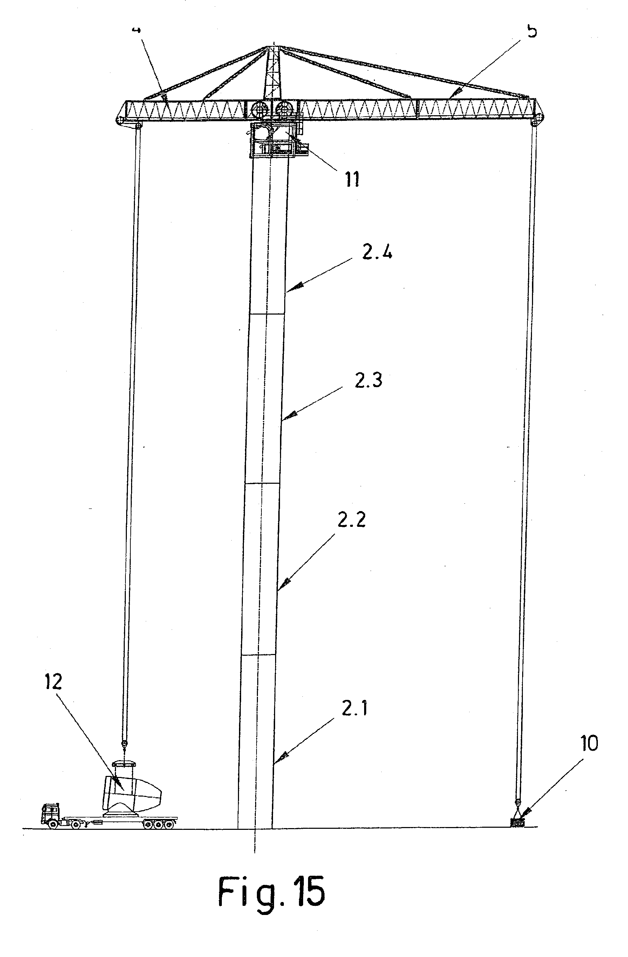

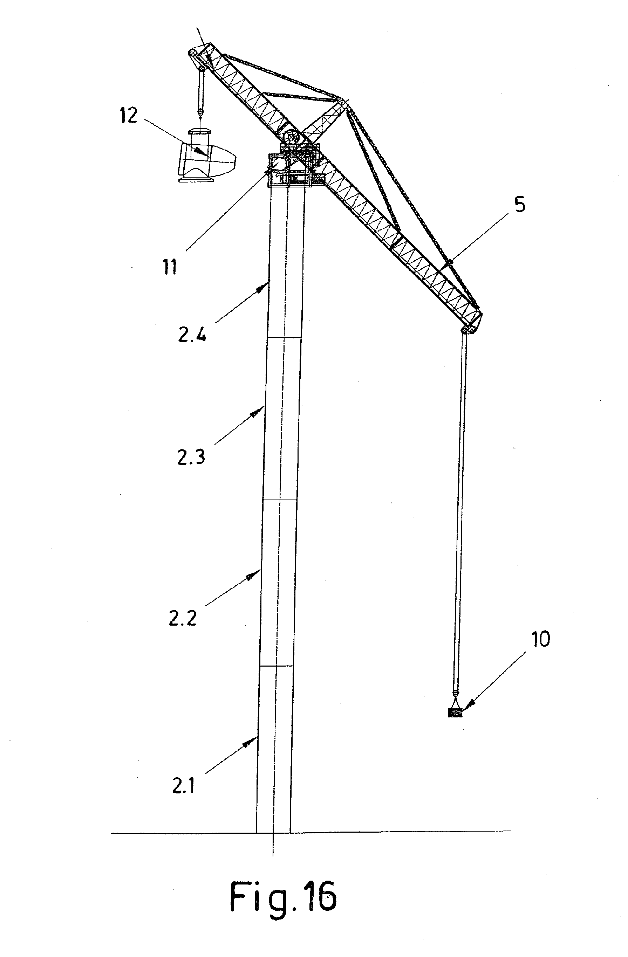

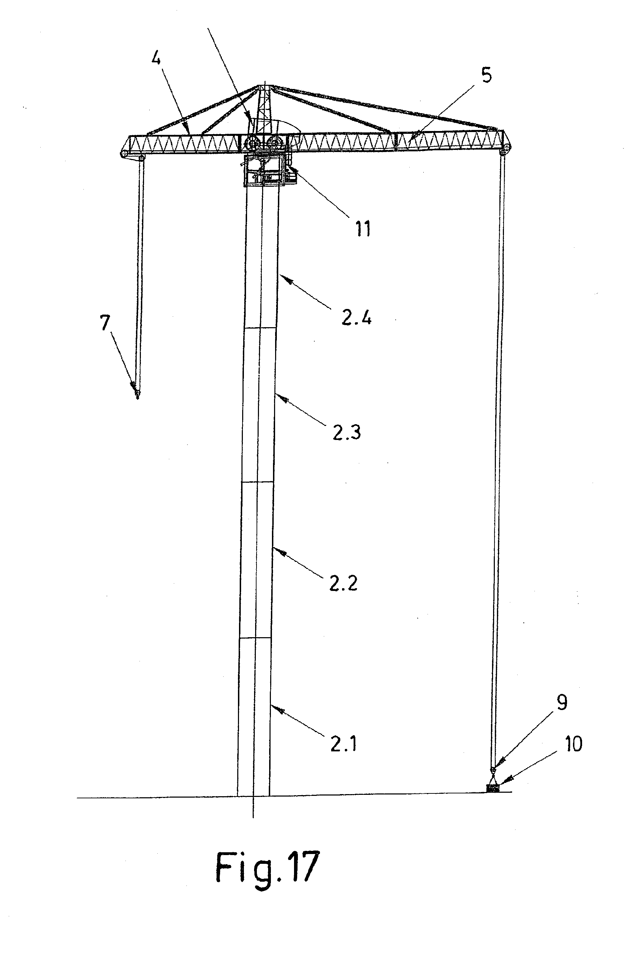

Likewise, as is illustrated in the sequence of figures 15, 16 and 17, the assembly is performed of the body (12) of the wind turbine, onto the ring (11) mounted beforehand.

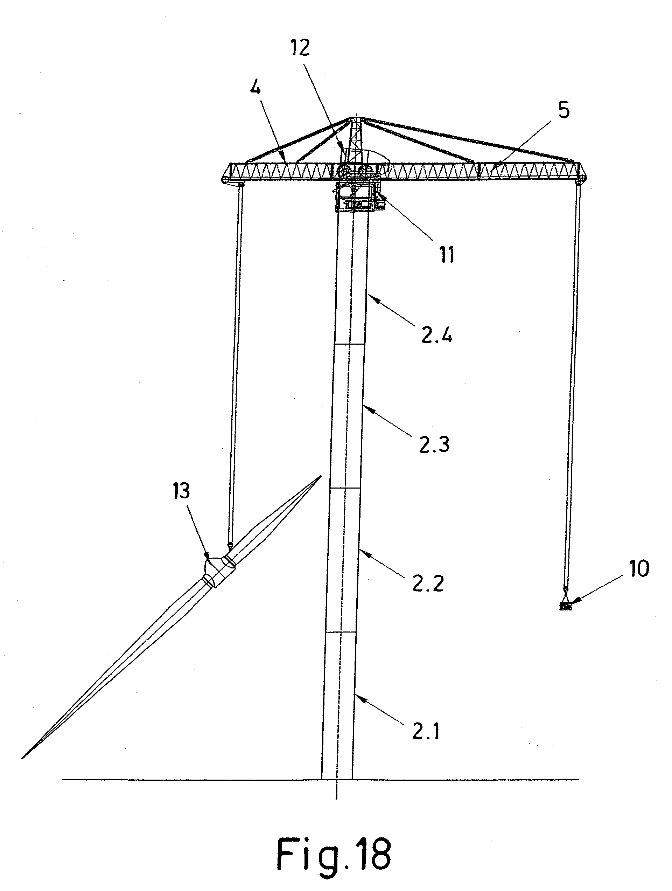

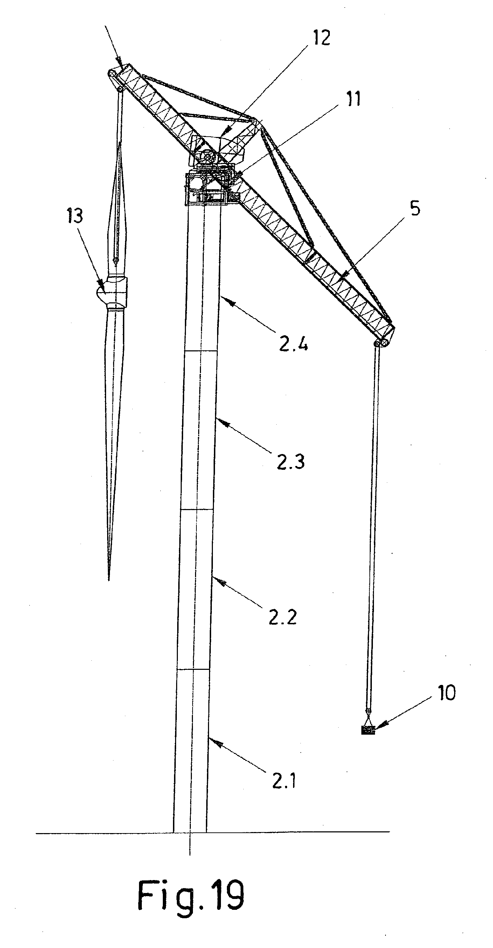

From the same position, as illustrated by the sequence of figures 18 and 19, the assembly is performed of the blade rotor (13) onto the body (12) of the wind turbine, as mounted in the previous stage.

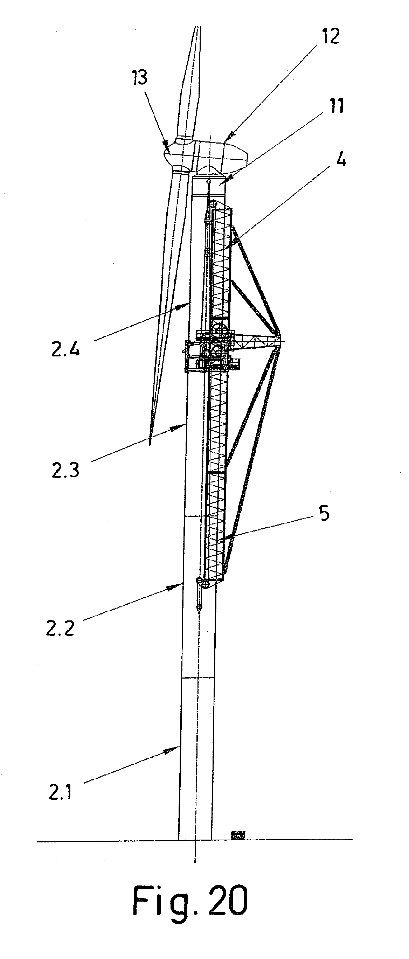

Once the blade rotor (13) has been mounted in position, the crane assembly is lowered, by means of the inverse procedure for its hoisting, to an intermediate height, with the assembly of the jib (4) and the counter-jib (5) in a vertical position as shown in figure 20, thus avoiding any interference between the jib (4) and the rotor blades (13).

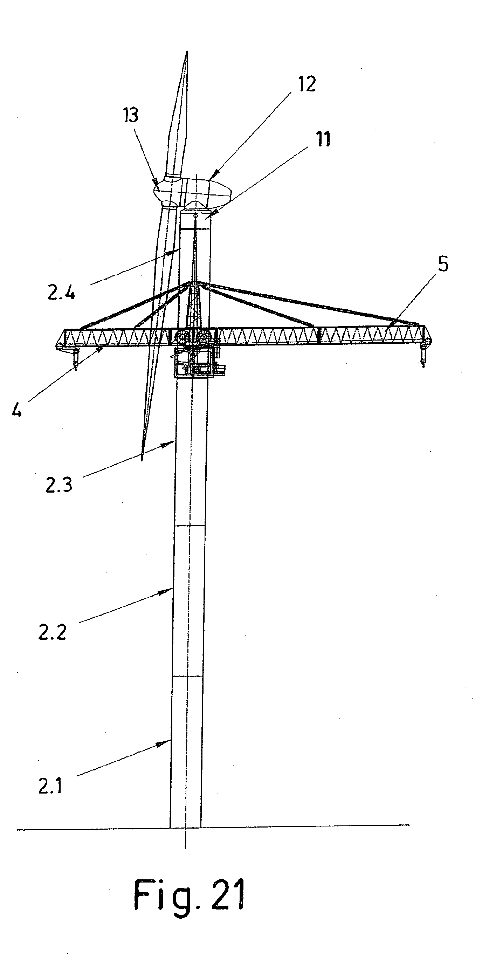

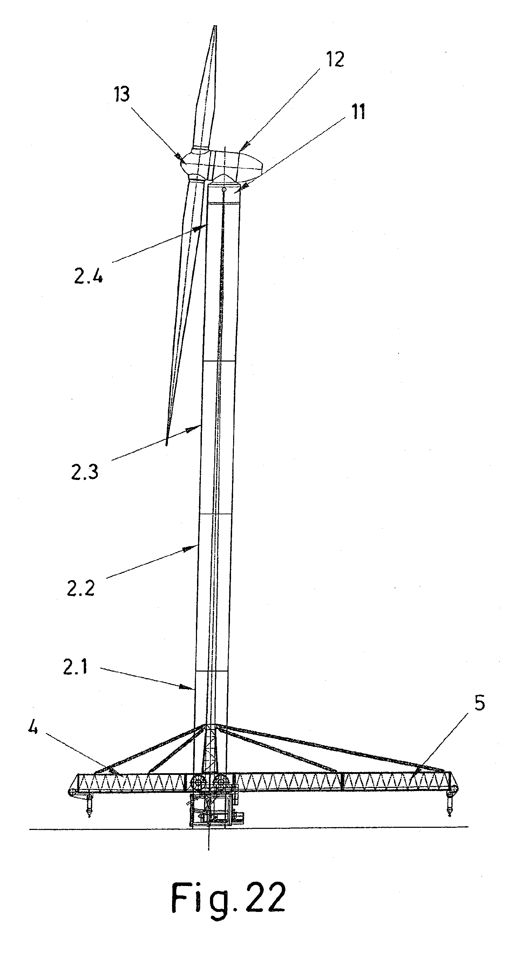

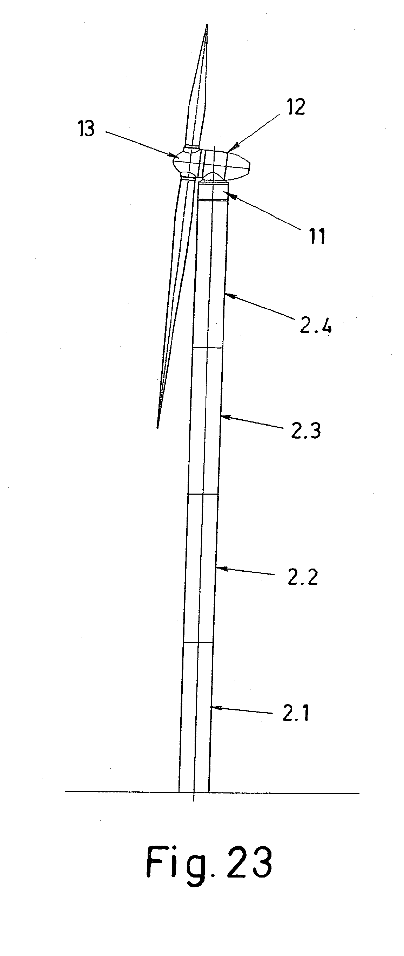

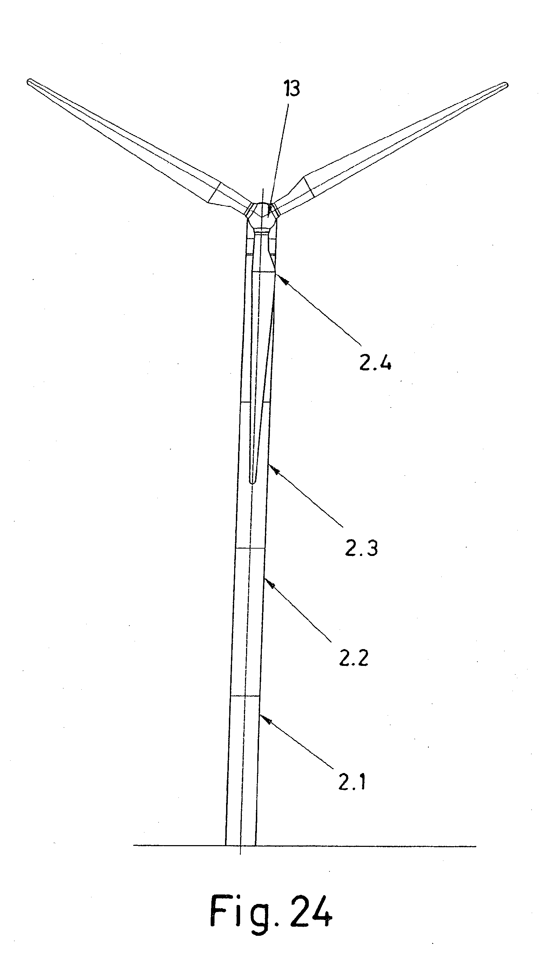

Once in this intermediate position, the assembly of the jib (4) and the counter-jib (5) is tilted back to the horizontal position, as shown in figure 21, for the entire crane assembly to be then lowered to the base, as shown in figure 22, whereupon the crane may be dismounted for removal from the wind turbine, with this being ready for operation in accordance with its construction assembly, as shown in figures 23 and 24.

Once the rotary ring (11) has been mounted onto the position of assembly on the highest part of the tower, the crane may itself be fitted onto said ring (11), whereby the crane becomes rotary, with the same manoeuvrability achieved as with a standard tower crane.

In these circumstances, the crane may be employed to suspend and move heavy pieces, enabling any partial assemblies to be effected at the foot of the tower, such as for example that of the operating unit that is contained within the body (12) of the wind turbine, or of the blades onto the corresponding rotor (13); a portable bay with a sliding roof may be located beside the wind turbine, to be used as an assembly workshop from where the partial units may be hoisted up to the position of assembly by means of the crane attached to the wind turbine.

## Claims

1. Crane for the assembly of wind turbines, **characterised in that** it comprises a central structure (1) which consists of an assembly capable of being attached in an embracing manner around a tower (2) to be constructed, with said central structure (1) being fitted with devices (3) for locking in a set position the central structure (1) onto the tower (2) of application on a provisional basis. An assembly comprising a jib (4) and a counter-jib (5) is attached in rotary connection with regard to said central structure (1); they are respectively equipped with winches (6 and 8), by means of which the suspended load and the relevant counterweight (10) may be moved and the crane itself may be suspended and raised to a point higher.

2. Crane for the assembly of wind turbines, according to claim 1, **characterised in that** the jib (4) and the counter-jib (5) comprise two equal parallel assemblies that are attached as a rotary coupling onto the sides of the central structure (1), which assemblies constitute a tilting unit with respect to the aforementioned central structure (1), being able to rotate between a horizontal position and a vertical position and even beyond that.

3. An assembly procedure for wind turbines, by means of the crane covered by claims 1 and 2, **characterised in that** it comprises the prior assembly, in a standard manner, of the lower section of the tower of the wind turbine, for example by means of the erecting, one on top of the other, of the two sections of tower (2.1 and 2.2), with attachment made in relation to said lower part of the tower of the assembly crane by the mounting of the central structure (1) of the same around the lower section of the tower, from which position the crane climbs, by means of its own winches (6 and 8) of the jib (4) and of the counter-jib (5), up to the highest part of the section of the tower erected, where the crane is secured into position by means of its locking devices (3), in order to proceed with the hoisting of the section of the tower immediately above (2.3), up to the position of assembly of said section (2.3).

4. An assembly procedure for wind turbines, according to claim 3, **characterised in that** the assembly crane climbs by means of its own winches (6 and 8), in successive stages, up to the highest part of the tower erected in the previous stage, with the crane being secured on each occasion onto said highest part, from where hoisting is effected to the position of assembly of the component parts of the wind turbine that correspond immediately above.

5. An assembly procedure for wind turbines, according to claims 3 and 4, **characterised in that**, by means of the successive climbing of the crane and the securing of the same to the highest part of the section of the tower of the wind turbine previously erected, hoisting is undertaken up to the position of assembly of successive sections (2.3, 2.4, etc) which comprise the tower of the wind turbine, up to the desired height; and from the end of the tower the rotary coupling ring (11), the body (12) of the wind turbine and the blade rotor (13) are hoisted to their corresponding position of assembly onto the tower.

6. An assembly procedure for wind turbines, according to claims 3, 4 and 5, **characterised in that** the hoisting with the crane of a component piece of the wind turbine unit up to the relevant position of assembly consists of the holding of the piece with the means of the winches (6) of the jib (4) and of the holding of a counterweight (10) with the means of the winches (8) of the counter-jib; the hoisting of the piece and of the counterweight (10) by means of the winches (6 and 8); the tilting of the assembly of the jib (4) and the counter-jib (5) into a vertical position, raising the piece to its position of assembly, and the subsequent return of the assembly of the jib (4) and the counter-jib (5) to the horizontal position, once the piece has been mounted into position.

7. An assembly procedure for wind turbines, according to claims 3 to 6, **characterised in that** following the assembly of the wind turbine unit, the crane is lowered by its own means, reversing the procedure used for climbing, to the base of the tower for dismounting, with an initial descent to a given height with the assembly of the jib (4) and the counter-jib (5) in a vertical position, in order not to compromise the rotor blades (13), and with rotation at mid-height of the unit of the jib (4) and counter-jib (5) to the horizontal position to proceed with the descent **in that** position until ground level.

8. An assembly procedure for wind turbines, according to claims 3 to 5, **characterised in that** when the rotary ring (11) has been mounted on the upper part of the tower of the wind turbine being assembled, the assembly crane may be mounted onto said ring (11), thereby becoming rotary and capable of manoeuvring like a standard tower crane for the handling of heavy pieces in the area surrounding the site of the wind turbine.
